**Europäisches Patentamt**

**European Patent Office**

**Office européen des brevets**

(19)

(11) Veröffentlichungsnummer: **0 584 651 A2**

(12) # EUROPÄISCHE PATENTANMELDUNG

(21) Anmeldenummer: **93112864.9**

(22) Anmeldetag: **11.08.93**

(51) Int. Cl.5: **C08F 210/02**, //(C08F210/02, 218:10)

(30) Priorität: **22.08.92 DE 4227905**

(43) Veröffentlichungstag der Anmeldung:
**02.03.94 Patentblatt 94/09**

(84) Benannte Vertragsstaaten:
**BE DE FR IT NL**

(71) Anmelder: **HOECHST AKTIENGESELLSCHAFT**

**D-65926 Frankfurt(DE)**

(72) Erfinder: **Hobes, John, Dr. Dipl.-Chem.**
**Ernastrasse 2b**
**D-4220 Dinslaken(DE)**
Erfinder: **Zoller, Wilhelm, Dr.Dipl.-Chem.**
**Im Torfveen 26**
**D-4200 Oberhausen 11(DE)**

(54) **Mischpolymerisate des Ethylens.**

(57) Es werden Mischpolymerisate aus Ethylen, dem Vinylester einer tertiären gesättigten Monocarbonsäure und gegebenenfalls einem weiteren Monomeren sowie ein Verfahren zu ihrer Herstellung beschrieben. Die Mischpolymerisate eignen sich vorzüglich zur Herstellung von Folien hoher mechanischer Festigkeit.

EP 0 584 651 A2

Rank Xerox (UK) Business Services
(3.10/3.09/3.3.4)

Die Erfindung betrifft Mischpolymerisate aus Ethylen, dem Vinylester einer tertiären gesättigten Monocarbonsäure und gegebenenfalls einem weiteren Monomeren, ein Verfahren zu ihrer Herstellung sowie ihre Verwendung zur Herstellung von Folien.

Folien aus thermoplastischen Kunststoffen finden vor allem als Verpackungsmaterial, zum Abdecken von Gütern und Pflanzbeeten und in Kombination mit anderen Folien als Verbundfolien umfangreiche Anwendung. Als Ausgangsstoffe werden Homopolymerisate z.B. die verschiedenen Polyethylentypen niederer, mittlerer und hoher Dichte oder Mischpolymerisate des Ethylens mit einem oder mehreren Copolymeren, wie Mono-alpha-Olefinen, Alkencarbonsäuren, Alkencarbonsäureester oder Vinylacetat, eingesetzt.

Entscheidend für die Vielseitigkeit ihres Einsatzes sind eine Reihe Eigenschaften, unter denen das mechanische, thermische und das optische Verhalten besondere Bedeutung haben. Dementsprechend wurden durch Variation der Polymerisationsbedingungen sowie der qualitativen oder quantitativen Zusammensetzung des der Polymerisation unterworfenem Monomerengemisches zahlreiche Polymerisate entwickelt, um den unterschiedlichen Anforderungen der Praxis an die Beschaffenheit von Folien zu entsprechen.

Nach der EP-B 82 502 stellt man Ethylen-Mischpolymerisate durch kontinuierliche Polymerisation eines Monomerengemisches, das 95,9 bis 99 Gew.-% Ethylen und ferner 0,3 bis 4,0 Gew.-% Vinylacetat und/oder Vinylpropionat und 0,1 bis 3,5 Gew.-% gesättigte aliphatische Aldehyde mit 2 bis 5 Kohlenstoffatomen im Alkylteil, gesättigte aliphatische Ketone mit 1 oder 2 Kohlenstoffatomen in den Alkylteilen, Alkene mit 3 bis 6 Kohlenstoffatomen und/oder Cyclohexen enthält, in einem rohrförmigen Reaktor bei Drücken von 100 bis 400 MPa und 190 bis 270°C her, wobei 30 bis 70 Gew.-% des Monomerengemisches am Eingang des Rohrreaktors und der restliche Anteil an mindestens 2 Stellen längs des Rohrreaktors eingespeist werden. Aus den Mischpolymerisaten erhaltene Folien eignen sich insbesondere zur Herstellung von Schwergutsäcken.

In der DE-A 1 924 823, Beispiel 4 ist ein Terpolymerisat beschrieben, das neben Ethylen 5,0 Gew.-% Vinylacetat und 1,5 Gew.-% Propylen enthält. Als 0,025 mm dicker Verpackungs- und Einwickelfilm zeigt dieses Terpolymerisat ausgezeichnete optische Eigenschaften, Steifheit und Reißfestigkeit.

Gegenstand der DE-B 2 018 718 ist ein Verfahren zur Herstellung von modifizierten Hochdruckpolyethylenen, bei dem die Polymerisation des Ethylens sowie gegebenenfalls anderer, mit Ethylen polymerisierbarer Verbindungen, in Gegenwart von Oligomeren des Isobutylens, die aus 4 bis 100 Isobutyleneinheiten aufgebaut sind, durchgeführt wird. Die nach diesem Verfahren gewonnenen Polymerisate eignen sich zur Herstellung von Folien, die die als Blocken bezeichnete Oberflächenklebrigkeit nicht zeigen.

Der vorliegenden Erfindung liegt die Aufgabe zugrunde, Mischpolymerisate bereitzustellen, die sich zu Folien mit hoher Festigkeit und ausgezeichneten optischen Eigenschaften verarbeiten lassen.

Die Erfindung besteht in Mischpolymerisaten des Ethylens, die, bezogen jeweils auf das Mischpolymerisat, 5 bis 50 Gew.-% eines Vinylesters einer tertiären gesättigten Monocarbonsäure und gegebenenfalls 5 bis 30 Gew.-% eines weiteren, copolymerisierbaren Monomeren enthalten und deren Schmelzindex (MFI 190/2,16) 0,1 bis 50 g/10 min beträgt.

Die erfindungsgemäßen Mischpolymerisate ergeben Folien, die sich gegenüber Folien aus Ethylen/Vinylacetat-Copolymerisaten durch höhere Zähigkeit und Shore-Härte sowie einen verbesserten Vicat-Erweichungspunkt bei zumindest gleich hervorragenden optischen Eigenschaften auszeichnen.

Ein wesentliches Merkmal der erfindungsgemäßen Mischpolymerisate ist, daß sie den Vinylester einer tertiären gesättigten Monocarbonsäure als Comonomer enthalten. Unter tertiären, gesättigten Monocarbonsäuren werden Verbindungen verstanden, die eine an ein tertiäres Kohlenstoffatom gebundene Carboxylgruppe enthalten. Sie werden durch Carbonsäuresynthese nach Koch aus Olefinen, Kohlenmonoxid und Wasser hergestellt und sind unter dem Namen "Versatic-Säuren" im Handel. Die Vinylester erhält man z.B. durch Umsetzung der genannten Säuren mit Acetylen. Beispiele für tertiäre, gesättigte Monocarbonsäuren sind 2,2-Dimethylpropionsäure (Pivalinsäure), 2,2-Dimethylbuttersäure, 2,2-Dimethylpentansäure, 2,2-Dimethylhexansäure, 2,2-Dimethylheptansäure (Neononansäure) und 2,2-Dimethyloctansäure (Neodecansäure). Bevorzugte Comonomere sind die von der Pivalinsäure, der 2,2-Dimethylheptansäure und von der 2,2-Dimethyloctansäure abgeleiteten Vinylester.

Der Anteil der Vinylester-Einheiten im Mischpolymerisat beträgt 3 bis 50 Gew.-%, bezogen auf das Mischpolymerisat; bevorzugt wird ein Anteil von 5 bis 35 Gew.-%, insbesondere 7 bis 30 Gew.-%.

Die erfindungsgemäßen Mischpolymerisate können außer Ethylen und dem Vinylester einer tertiären Carbonsäure noch ein weiteres Comonomer enthalten. Geeignete Comonomere sind die Vinylester unverzweigter gesättigter Monocarbonsäuren, insbesondere solcher mit 2 bis 4 Kohlenstoffatomen, Alkencarbonsäuren und Estern von Alkencarbonsäuren mit gesättigten aliphatischen $C_1$- bis $C_8$-Alkoholen. Die Alkohole können geradkettig oder verzweigt sein und die OH-Gruppe an einem primären, sekundären oder tertiären Kohlenstoffatom tragen. Beispiele für derartige Verbindungen sind Vinylacetat, Vinylpropionat, Acrylsäure, Acrylsäuremethylester, Acrylsäureethylester, Acrylsäure-n/i-butylester und Acrylsäure-2-ethylhexylester. Bevorzugt werden Vinylacetat und/oder Acrylsäuremethylester eingesetzt. Der Anteil dieser weiteren Comonomereneinheit im Mischpolymerisat beträgt 5 bis 30 Gew.-%, bezogen auf das Mischpolymerisat, vorzugsweise 5 bis 15 Gew.-%.

Die erfindungsgemäßen Mischpolymerisate sind weiterhin durch einen Schmelzindex MFI (190/2,16) von 0,1 bis 50 g/10 min, insbesondere 0,2 bis 25 g/10 min charakterisiert; er wird nach der Deutschen Norm DIN 53735 bestimmt. Empirisch läßt sich jedem gemessenen Schmelzindex eine nach dem Verfahren der Gelpermeationschromatographie bestimmte mittlere Molekularmasse zuordnen.

Die beanspruchten binären und ternären Mischpolymerisate des Ethylens lassen sich durch Mischpolymerisation der Monomeren bei Drücken von 50 bis 350, vorzugsweise 100 bis 300 MPa und Temperaturen von 100 bis 350, vorzugsweise 120 bis 325 °C in Gegenwart von Sauerstoff oder Radikale bildenden Verbindungen herstellen. Da sich im allgemeinen die Polymerisationsgeschwindigkeit der Monomeren unterscheidet, weicht die Zusammensetzung des Polymerisats von der Zusammensetzung des Monomerengemisches ab.

Als Polymerisationsinitiatoren werden Sauerstoff oder Radikale bildende Verbindungen eingesetzt. Zu den Radikale bildenden Verbindungen gehören organische Peroxide, Hydroperoxide oder Azoverbindungen. Von den organischen Peroxiden haben sich tert.-Butylperbenzoat, tert.-Butylperoxipivalat, Bis(2-ethylhexyl)-peroxidicarbonat und Dilauroylperoxid bewährt. Als Azoverbindung gelangt mit Erfolg Azo-bis(isobutyronitril) zum Einsatz. Besonders bewährt haben sich tert.Butylperoxipivalat und Bis (2-ethylhexyl)peroxidicarbonat. Die Verbindungen können allein oder im Gemisch verwendet werden. Die Polymerisationsinitiatoren werden in einer Konzentration von 3 bis 50, vorzugsweise 5 bis 40, insbesondere 10 bis 25 Gew.-ppm, bezogen auf Ethylen, eingesetzt. Man führt sie der Polymerisation direkt oder als Lösung in einem organischen Lösungsmittel zu. Als Lösungsmittel dienen Kohlenwasserstoffe wie Isooctan, Benzol, Toluol oder Benzinfraktionen.

Der Schmelzindex der erfindungsgemäßen Terpolymerisate und damit ihre mittlere Molekularmasse wird bei gegebener Zusammensetzung des Monomerengemischs durch Variation der Reaktionsparameter Druck und Temperatur und gegebenenfalls durch Zusatz eines Molekularmassenreglers eingestellt. Molekularmassenregler sind Verbindungen, die den Monomeren in unterschiedlicher Konzentration zugesetzt werden, um das Wachstum des polymeren Moleküls und damit die Molekularmasse des Polymerisats zu beeinflussen. Zu den Molekularmassereglern gehören Vertreter der unterschiedlichsten Stoffklassen. Als Beispiele seien Wasserstoff, Alkane, unverzweigte alpha-Olefine, Alkohole, Aldehyde und Ketone genannt (vgl. Fortschr. Hochpolym.-Forschg. 7(3), 386-448). Besonders bewährt hat sich Propionaldehyd. Die Molekularmasseregler werden in einer Menge von 0,05 bis 10 Gew.-%, bezogen auf das Monomerengemisch, angewandt.

Die erfindungsgemäßen Mischpolymerisate können in den bekannten Hochdruckreaktoren hergestellt werden. Hierzu gehören Rührautoklaven und Rohrreaktoren (vgl. Ullmanns Encyclopädie der Technischen Chemie, 4. Auflage, Verlag Chemie Weinheim-Basel 1980, Band 19 Seite 169, 172 bis 175). Bei Verwendung eines Rohrreaktors - er ist die für die Polymerisation im technischen Maßstab bevorzugte Reaktorart - kann das gesamte, bereits Initiatoren enthaltende Monomerengemisch dem Reaktoreingang in einem Strom zugeführt werden. Besonders vorteilhaft ist es jedoch, einen Rohrreaktor mit Kaltgas- und Initiatornachdosierung einzusetzen und das Monomerengemisch in mindestens zwei Teilströme aufzuteilen. Ein Teilstrom wird dann dem Reaktoreingang zugeleitet, weitere Teilströme werden längs des Reaktors, meist im Bereich einer Spitzentemperatur, der Reaktionszone eingespeist. Lösungsmittel wie aliphatische Kohlenwasserstoffe oder Kohlenwasserstoffgemische, Benzol oder Toluol, können im Reaktionsgemisch enthalten sein, wenngleich sich die lösungsmittelfreie Arbeitsweise besonders bewährt hat.

Aus den neuen Mischpolymerisaten hergestellte Folien vereinen hervorragende optische Eigenschaften mit ausgezeichnetem mechanischem Verhalten. Insbesondere Zähigkeit und Shore-Härte sind gegenüber herkömmlichen Folien aus Ethylen/Vinylacetat-Mischpolymerisaten deutlich verbessert. Überdies besitzen sie einen höheren Vicat-Erweichungspunkt. Druckfarben haften auf den Folien sehr fest, das Druckbild ist klar und scharf konturiert.

Die Herstellung der Folien erfolgt bevorzugt nach dem der Fachwelt vertrauten Extrusionsblasverfahren. Hierzu wird das Mischpolymerisat als Pulver oder Granulat in einer Schneckenpresse aufgeschmolzen, entlüftet und homogenisiert und durch eine Ringdüse als Schlauch ausgepreßt. Zwischen Düse und einer in bestimmter Entfernung von der Düse angeordneten Abquetschvorrichtung wird der Schlauch durch ein Gas, vorzugsweise Luft, aufgeblasen, bis die gewünschte Foliendicke erreicht ist. Nach der Abquetschvorrichtung wird der Schlauch aufgewickelt und gegebenenfalls aufgetrennt.

Die Folien können übliche Zusatz- und Hilfsstoffe enthalten wie Antioxidantien, Lichtschutzmittel, Gleitmittel, Antiblockmittel, organische Farbstoffe, anorganische Pigmente, Füllstoffe und Antistatika.

In den nachstehenden Beispielen wird die Erfindung näher erläutert. Zur Bestimmung der Stoffeigenschaften werden folgende Verfahren herangezogen:

Schmelzindex MFI (190/2,16) in g/10 min; gemessen nach DIN 53735

Schlagzugzähigkeit (abgekürzt: SZZ) in mJ/mm$^2$; gemessen nach DIN 53448

Shore-Härte (abgekürzt: Shore); gemessen nach DIN 53505 Vicat-Erweichungspunkt (abgekürzt: Vicat) in °C; gemessen nach DIN 53460 (Verf. A/10N)

Trübung; gemessen nach ASTM D 1003

Glanz ; gemessen nach ASTM D 2457

Zur Ermittlung des Estergehaltes werden die Mischpolymerisate bei 450°C in einem geschlossenen System pyrolisiert. Aus dem Vinylacetat freigesetzte Essigsäure wird in Wasser aufgenommen, die tertiäre Carbonsäure mit Toluol extrahiert. Beide Säuren werden getrennt mit wäßriger Jodid/Jodat-Lösung titrimetrisch bestimmt.

Beispiele 1 bis 9

Die Beispiele 1 bis 6 betreffen die neuen Mischpolymerisate, ihnen sind zum Vergleich in den Beispielen 7 bis 9 Ethylen/Vinylacetat-Mischpolymerisate des Standes der Technik gegenübergestellt.

Die Mischpolymerisate werden in einem kontinuierlich betriebenen Rührautoklav, dem ein Hochdruckgasabscheider und ein Niederdruckgasabscheider nachgeschaltet sind, hergestellt. Das für die Polymerisation bestimmte Monomerengemisch wird auf den gewünschten Druck gebracht und in den Hochdruckreaktor eingeleitet. Gleichzeitig setzt man die für die Aufrechterhaltung der Polymerisation benötigte Menge Polymerisationsinitiator zu (Bis-(2-ethylhexyl)peroxidicarbonat, abgekürzt: PO, gelöst in Benzin). Die Verweilzeit des Reaktionsgemisches im Hochdruckreaktor beträgt etwa 50 Sekunden.

Die Mischpolymerisate werden auf einer Blasfolienanlage verarbeitet. Der Durchsatz beträgt 7 kg/h, die Abmessung der Ringdüse beträgt 50 x 1 mm, das Aufblasverhältnis ist 2,5 : 1.

Reaktionsbedingungen, Initiatorkonzentration (bezogen auf eingesetztes Ethylen), Zusammensetzung und Eigenschaften der Mischpolymerisate sind der Tabelle zu entnehmen.

Die erfindungsgemäßen Mischpolymerisate der Beispiele 1 bis 6 weisen gegenüber den zum Vergleich hergestellten Mischpolymerisaten der Beispiele 7 bis 9 eine beträchtlich gesteigerte Schlagzugzähigkeit und Shore-Härte, einen deutlich erhöhten Vicat-Erweichungspunkt, sowie eine merkliche Verbesserung der Glanzwerte auf. Sie sind daher zur Herstellung von Folien besonders geeignet.

Tabelle

| Beispiel | Druck MPa | Temp. °C | PO ppm | Moderator Gew.-% | Vinyl-ester(1) Gew.-% | VA(2) Gew.-% | MFI 190/2,16 | d g/cm³ | SZZ mJ/mm² | Shore A/D | Vicat °C | Trübung % | Glanz % |
|---|---|---|---|---|---|---|---|---|---|---|---|---|---|
| 1 | 240 | 200 | 6 | 0,3 | 7,2 | – | 2,9 | 0,925 | 1700 | 98/49 | 110 | 12 | 55 |
| 2 | | | 15 | 0,1 | 17,3 | – | 1,3 | 0,920 | 2100 | 95/40 | 90 | 10 | 50 |
| 3 | | | 35 | 0,1 | 27,0 | – | 1,6 | 0,918 | 2300 | 93/38 | 65 | 13 | 45 |
| 4 | | | 48 | – | 34,5 | – | 2,0 | 0,917 | 2400 | 85/33 | 63 | 12 | 45 |
| 5 | | | 28 | – | 20,8 | 10,1 | 1,5 | 0,921 | 2450 | 90/34 | 60 | 8 | 60 |
| 6 | 220 | | 42 | – | 30,0 | – | 1,2 | 0,917 | 2500 | 86/32 | 62 | 3 | 75 |
| 7 | 240 | | 8 | 0,4 | – | 7,0 | 2,1 | 0,925 | 1300 | 95/39 | 85 | 12 | 41 |
| 8 | | | 16 | 0,2 | – | 17,0 | 1,7 | 0,937 | 1700 | 89/29 | 65 | 11 | 47 |
| 9 | | | 29 | – | – | 27,0 | 2,7 | 0,952 | 1750 | 76/26 | 42 | 8 | 56 |

(1) Beispiele 1 bis 5: Neononansäurevinylester
    Beispiel 6 : Neodecansäurevinylester
(2) Vinylacetat

## Patentansprüche

1. Mischpolymerisate des Ethylens, die, bezogen jeweils auf das Mischpolymerisat, 3 bis 50 Gew.-% eines Vinylesters einer tertiären gesättigten Monocarbonsäure und gegebenenfalls 5 bis 30 Gew.-%

eines weiteren, copolymerisierbaren Monomeren enthalten und deren Schmelzindex (MFI 190/2,16) 0,1 bis 50 g/10 min beträgt.

2. Mischpolymerisate nach Anspruch 1, dadurch gekennzeichnet, daß sich die Vinylester von der 2,2-Dimethylpropionsäure der 2,2-Dimethylheptansäure oder von der 2,2-Dimethyloctansäure als tertiäre gesättigte Monocarbonsäure ableiten.

3. Mischpolymerisate nach Anspruch 1 oder 2, dadurch gekennzeichnet, daß der Anteil der Vinylester tertiärer gesättigter Monocarbonsäuren im Mischpolymerisat 5 bis 35 Gew.-%, insbesondere 7 bis 30 Gew.-% beträgt.

4. Mischpolymerisate nach einem oder mehreren der Ansprüche 1 bis 3, dadurch gekennzeichnet, daß sie als weiteres copolymerisierbares Monomer den Vinylester einer unverzweigten gesättigten Monocarbonsäure, eine Alkencarbonsäure oder einen Alkencarbonsäureester eines gesättigten aliphatischen $C_1$- bis $C_8$-Alkohols enthält.

5. Mischpolymerisate nach Anspruch 4, dadurch gekennzeichnet, daß das weitere copolymerisierbare Monomer Vinylacetat, Vinylpropionat, Acrylsäure, Acrylsäuremethylester, Acrylsäureethylester, Acrylsäure-n/i-butylester oder Acrylsäure-2-ethylhexylester ist.

6. Verfahren zur Herstellung von Mischpolymerisaten nach einem oder mehreren der Ansprüche 1 bis 5, dadurch gekennzeichnet, daß das Monomerengemisch bei Drücken von 50 bis 350, vorzugsweise 100 bis 300 MPa und Temperaturen von 100 bis 350, vorzugsweise 120 bis 325°C in Gegenwart von Sauerstoff oder Radikale bildende Verbindungen copolymerisiert wird.

7. Verfahren zur Herstellung von Mischpolymerisaten nach Anspruch 6, dadurch gekennzeichnet, daß als Radikale bildende Verbindungen tert.-Butylperbenzoat, tert.-Butylperoxidpivalat, Bis(2-ethylhexyl)-peroxidicarbonat oder Dilauroylperoxid eingesetzt werden.

8. Verfahren zur Herstellung von Mischpolymerisaten nach Anspruch 6 oder 7, dadurch gekennzeichnet, daß die Polymerisation in Gegenwart von 0,05 bis 10 Gew.-%, bezogen auf das Monomerengemisch eines Molekularmassereglers, durchgeführt wird.

9. Verfahren zur Herstellung von Mischpolymerisaten nach Anspruch 8, dadurch gekennzeichnet, daß als Molekularmasseregler Propionaldehyd eingesetzt wird.

10. Verwendung von Mischpolymerisaten nach einem oder mehreren der Ansprüche 1 bis 5 zur Herstellung von Folien.